# EUROPÄISCHE PATENTSCHRIFT

(11) **EP 3 225 142 B1**
(45) Veröffentlichungstag und Bekanntmachung des Hinweises auf die Patenterteilung: **22.08.2018**
(21) Anmeldenummer: 17161512.3
(22) Anmeldetag: 17.03.2017
(51) Int. Cl.: A47J 31/42, A47J 42/50

(54) **KAFFEEMASCHINE**
COFFEE MACHINE
MACHINE À CAFÉ

(30) Priorität: 29.03.2016 DE 102016105702
(43) Veröffentlichungstag der Anmeldung: 04.10.2017
(73) Patentinhaber: Melitta Europa GmbH & Co. KG, 32427 Minden (DE)
(72) Erfinder: SCHÄFER, Markus, 32825 Blomberg (DE); SACHTLEBEN, Andreas, 32427 Minden (DE)
(74) Vertreter: Dantz, Jan Henning

(56) Entgegenhaltungen:
- EP-A1- 2 878 240
- CH-A5- 690 609
- DE-U1-202011 109 935

## Beschreibung

Die vorliegende Erfindung betrifft eine Kaffeemasche mit mindestens einem Behälter für Kaffeebohnen nach dem Oberbegriff des Anspruches 1.

Die DE 26 41 509 B1 zeigt eine Haushaltskaffeemühle, bei der ein Vorratsbehälter für Kaffeebohnen neben einer Kaffeekanne positioniert ist. Um Kaffeebohnen zu einem Mahlwerk oberhalb der Kaffeekanne zu fördern, ist der Behälter für die Kaffeebohnen vertikal verschiebbar und kann angehoben werden, um dann über eine Schüttöffnung Kaffeebohnen zu dem Mahlwerk zuzuführen. Diese Handhabung ist vergleichsweise umständlich, führt allerdings zu einer flachen Bauweise der Kaffeemaschine, da der Bohnenbehälter nicht oberhalb des Mahlwerks angeordnet ist.

Die DE 196 06 076 A1 und die US 2016/0073825 A1 zeigen Kaffeemühlen, die unabhängig von einer Kaffeemaschine betrieben werden und einen Behälter zur Aufnahme von Kaffeebohnen aufweisen.

Die EP 2 878 240 A1 offenbart einen Kaffeevollautomaten mit einem abnehmbaren Bohnenbehälter, der auf einer Betätigungsbahn bewegbar ist und an seinem Boden eine geneigte Bodenfläche mit nach oben hervorstehenden Rippen aufweist.

Die US 7 063 005 B1 offenbart eine Kaffeemaschine, bei der über einen Bohnenbehälter Kaffeebohnen zu einem Mahlwerk zuführbar sind, das oberhalb einer Brüheinheit angeordnet ist. Das frisch gemahlene Kaffeemehl kann dann unmittelbar nach dem Mahlen zum Aufbrühen von Kaffee genutzt werden, was für die Qualität des Getränkes vorteilhaft ist. Die Anordnung des Bohnenbehälters oberhalb der Mühle ermöglicht das Fördern der Kaffeebohnen über die Schwerkraft, allerdings ist es notwendig, zum vollständigen Entleeren des Bohnenbehälters die Bodenfläche mit einer Schräge zu versehen. Eine sichere Entleerung des Bohnenbehälters ist nur dann gewährleistet, wenn die Schwerkraft größer ist als andere Kräfte, die die Kaffeebohnen daran hindern, aus dem Bohnenbehälter zu rutschen. Daher muss der Neigungswinkel des Bodens an dem Bohnenbehälter vergleichsweise groß sein, um ein solches Rutschen der Kaffeebohnen zu gewährleisten, was die Bauhöhe vergrößert, da der Bohnenbehälter bei einem vorbestimmten Volumen höher ausgebildet werden muss als bei einer nur flach geneigten Bodenfläche an dem Behälter.

Es ist daher Aufgabe der vorliegenden Erfindung, eine Kaffeemaschine zu schaffen, die einen Bohnenbehälter mit einer geringen Bauhöhe besitzt und ein Fördern der Kaffeebohnen über die Schwerkraft ermöglicht.

Diese Aufgabe wird mit einer Kaffeemaschine mit den Merkmalen des Anspruchs 1 gelöst.

Erfindungsgemäß ist eine Bodenfläche des Behälters für Kaffeebohnen zu der Auslassöffnung hin abfallend geneigt, wobei an der Bodenfläche eine Vielzahl von zur Auslassöffnung führenden Rippen vorgesehen ist, die sternförmig um die Auslassöffnung angeordnet sind. Durch die Rippen wird eine Kontaktfläche zwischen einer Kaffeebohne und einer Bodenfläche des Behälters verringert und die Rippen sorgen dafür, dass die Adhäsionskräfte zwischen Behälterboden und Kaffeebohne reduziert werden. Gerade bei Kaffeebohnen mit einem hohen Ölgehalt besteht das Problem, dass hohe Adhäsionskräften zu einer ebenen Auflagefläche vorhanden sind, die trotz der Neigung der Auflagefläche eine Förderung über die Schwerkraft verhindern. Durch die Rippen wird einerseits die Kontaktfläche verringert, so dass die Adhäsionskräfte kleiner werden und zudem führen die Rippen zu der Auslassöffnung, so dass keine mechanischen Strukturen das Rutschen der Kaffeebohnen behindern.

In einer bevorzugten Ausgestaltung ist zwischen zwei benachbarten Rippen jeweils eine Nut ausgebildet, wobei die Breite der Nut kleiner als 6 mm, insbesondere kleiner 4 mm ist. Dadurch wird vermieden, dass eine Kaffeebohne klemmend an einer Rippe gehalten wird, da die Kaffeebohnen eine größere Breite besitzen. Die Nut kann dabei keilförmig sich zur Auslassöffnung hin verjüngen. Alternativ oder zusätzlich ist es möglich, die Breite der Rippen zur Auslassöffnung hin zu verringern. Es ist auch möglich, die Breite der Rippen konstant zu wählen beispielsweise zwischen 1mm und 4mm Breite, und nur die Breite der Nut zu verkleinern.

Für ein Rutschen der Kaffeebohnen durch Schwerkraft besitzt die Oberseite der Rippen eine Neigung zur Horizontalen von kleiner als 22°, insbesondere kleiner als 20°. Die Neigung der Rippen kann beispielsweise in nur einem Bereich zwischen 16° bis 19° liegen, was deutlich unter dem Neigungswinkel von glatten Oberflächen ist, die meist einen Neigungswinkel von rund 23° besitzen. Die Änderung des Neigungswinkels um nur 5° kann bei einem entsprechenden Durchmesser bzw. einer größeren Grundfläche des Bohnenbehälters dazu führen, dass bei ansonsten konstanter Geometrie hinsichtlich der Höhe das nutzbare Volumen um über 20 Prozent ansteigt. Insofern besitzt der Neigungswinkel der Rippen bzw. der Bodenfläche einen erheblichen Einfluss auf das Füllvolumen des Behälters für Kaffeebohnen.

Vorzugsweise umfasst die Brüheinheit einen bewegbaren Filterhalter, in den in einer Befüllposition ein Filterpapiereinsatz zur Aufnahme von Kaffeemehl einfügbar ist und der dann in eine Brühposition an oder in der Kaffeemaschine angeordnet wird. Das gemahlene Kaffeemehl kann dann von einem Auslass des Mahlwerks in den Filterpapiereinsatz oder einen anderen Filter an dem Filterhalter eingefüllt werden. Zum Brühen von Kaffee kann dann über eine Zuleitung von heißem Wasser, vorzugsweise über einen Duschkopf mit einer Vielzahl von Auslassöffnungen für das heiße Wasser, der Kaffee gebrüht und in ein Gefäß eingeleitet werden.

Um ein Verklemmen von Kaffeebohnen zu vermeiden, ist oberhalb der Auslassöffnung eine Verteilerplatte vorgesehen, und die Kaffeebohnen gelangen zwischen eine Unterseite der Verteilerplatte und die Rippen zu der Auslassöffnung.

Um die Kaffeebohnen optimal zu der Auslassöffnung zu führen, kann die Anzahl der Rippen mit zunehmendem Abstand von der Auslassöffnung zunehmen. Dabei kann in einem inneren ringförmigen Bereich um die Auslassöffnung die Anzahl der Rippen geringer sein als in einem zweiten ringförmigen Bereich, der um den ersten ringförmigen Bereich angeordnet ist. Vorzugsweise können drei ringförmige Bereiche mit einer unterschiedlichen Anzahl von Rippen vorgesehen sein.

Für eine einfache Handhabung kann der Bohnenbehälter von der an der Kaffeemaschine lösbar fixiert sein, insbesondere über eine Steck- oder Rastverbindung oder einen Bajonettverschluss. Auch andere mechanische Befestigungsmittel sind möglich, um den Bohnenbehälter von der Kaffeemaschine abzunehmen und dann beispielsweise in einem Geschirrspüler zu reinigen. Der Bohnenbehälter kann dabei aus Kunststoff hergestellt sein, insbesondere aus einem transparenten Kunststoff, so dass das Füllvolumen von außen sichtbar ist.

Die Erfindung wird nachfolgend anhand eines Ausführungsbeispiels mit Bezug auf die beigefügten Zeichnungen näher erläutert. Es zeigen:

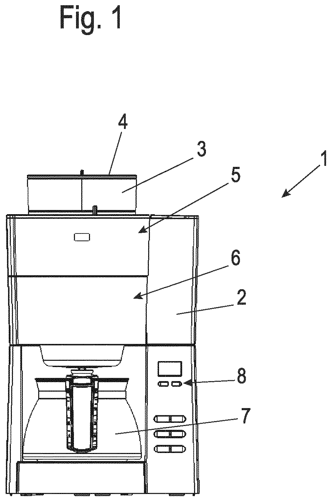

- Figur 1: eine Ansicht einer erfindungsgemäßen Kaffeemaschine;
- Figur 2: eine Detailansicht des Bohnenbehälters der Kaffeemaschine der Figur 1;
- Figur 3: eine Detailansicht des Bohnenbehälters der Figur 2;
- Figur 4: eine Draufsicht auf den Bohnenbehälter der Figur 2 ohne Verteilerplatte;
- Figur 5: eine Draufsicht auf den Bohnenbehälter der Figur 2 mit Verteilerplatte; und
- Figur 6: eine Schnittansicht des Bohnenbehälters oberhalb des Mahlwerks.

Eine Kaffeemaschine 1 umfasst ein Gehäuse, an dem an einer Oberseite ein Behälter 3 für Kaffeebohnen angeordnet ist. Der Behälter 3 ist über einen abnehmbaren Deckel 4 verschließbar. Unterhalb des Behälters 3 für Kaffeebohnen ist ein Mahlwerk 5 angeordnet, um Kaffeebohnen vor dem Brühen frisch zu mahlen. Von dem Mahlwerk 5 kann das frisch gemahlene Kaffeemehl zu einer Brüheinheit 6 zugeführt werden, in der dann über heißes Wasser aus einem Tank 2 Kaffee gebrüht wird, das in eine Kanne 7 eingeleitet wird. Die Bedienung der Kaffeemaschine 1 erfolgt über eine Bedien- und Steuereinheit 8, die an dem Gehäuse vorgesehen ist.

Die Kaffeemaschine 1 ist als Filterkaffeemaschine ausgebildet und umfasst an der Brüheinheit 6 einen bewegbaren Filterhalter, in den in einer Befüllposition ein Filterpapiereinsatz einfügbar ist und der dann in eine Brühposition in die Kaffeemaschine 1 eingeschoben oder eingeschwenkt wird. Das in dem Mahlwerk 5 gemahlene Kaffeemehl kann dann von einem Auslass des Mahlwerks 5 in den Filterpapiereinsatz oder einen anderen Filter an dem Filterhalters eingefüllt werden. Zum Brühen von Kaffee wird dann heißes Wasser auf das Kaffeemehl zugeleitet, vorzugsweise über eine Duschkopf mit einer Vielzahl von Auslassöffnungen, um dann den gebrühten Kaffee in der Kanne 7 oder einem anderen Gefäß zu sammeln.

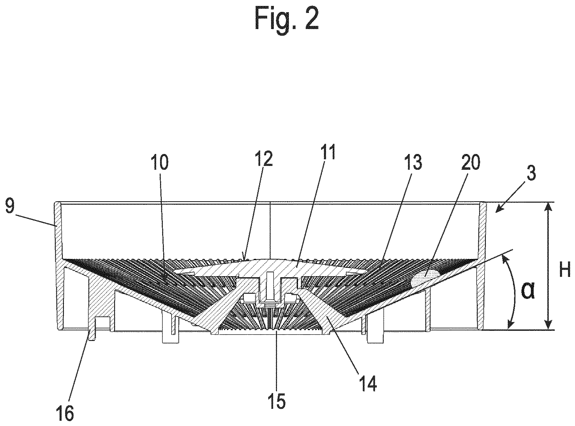

Der Behälter 3 ist ohne Deckel 4 in Figur 2 gezeigt. Der Behälter 3 umfasst eine im Wesentlichen vertikale Seitenwand 9 und eine zu einer Auslassöffnung 15 nach unten geneigt verlaufende Bodenfläche 10. Innerhalb des Behälters 3 ist oberhalb der Auslassöffnung 15 eine Verteilerplatte 11 angeordnet, die an der Oberseite eine gekrümmte oder zur Außenseite hin geneigt abfallende Oberfläche 12 aufweist, um zu vermeiden, dass Kaffeebohnen auf der Verteilerplatte 11 aufliegen, die nicht zu der Auslassöffnung 15 gefördert werden.

Die Bodenfläche 10 weist einen kegelstumpfförmigen Boden auf, der sich zwischen der Auslassöffnung 15 und der Seitenwand 9 erstreckt, wobei auf dem Boden eine Vielzahl von Rippen 13 an der Oberseite vorgesehen sind. Die Rippen 13 besitzen dabei eine gleichmäßige Höhe, beispielsweise zwischen 1 mm bis 5 mm und verlaufen mit ihrer Längsrichtung zu der Auslassöffnung 15 hin. Die Rippen 13 sind somit sternförmig um die Auslassöffnung 15 angeordnet.

Die Verteilerplatte 11 ist über einen Halter mit Armen 14 in dem Behälter 3 gehalten, der mehrere Arme aufweist, die sich von der Bodenfläche 10 unter einen mittleren Bereich der Verteilerplatte 11 erstrecken. Zwischen den Armen 14 können Kaffeebohnen 20 zu der Auslassöffnung 15 schwerkraftbedingt gleiten.

Um ein Gleiten der Kaffeebohnen 20 auf den Rippen 13 zu gewährleisten, ist die Oberseite der Rippen 13 in einem Neigungswinkel α zur Horizontalen zwischen 15 bis 22°, insbesondere 16 bis 20° ausgerichtet, so dass die Bauhöhe H des Behälters 3 vergleichsweise gering ist.

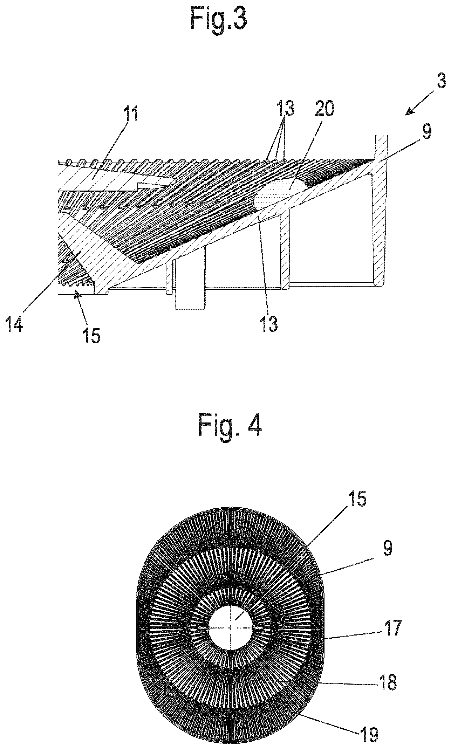

In Figur 3 ist eine vergrößerte Ansicht einer Kaffeebohne 20 dargestellt, die auf einer Rippe 13 aufliegt. Die Rippen 13 können dabei eine Breite zwischen 0,8 bis 4mm, insbesondere 1,5 bis 3mm besitzen. Durch die Anordnung einer Vielzahl von Rippen 13 an der Bodenfläche 10 verringert sich die Kontaktfläche der Unterseite der Kaffeebohne mit der Bodenfläche, so dass die Adhäsionskräfte auch bei besonders ölhaltigen Kaffeebohnen gering sind. Dadurch kann der Neigungswinkel α geringer ausgebildet werden als bei Behältern 3 mit einer ebenen Bodenfläche.

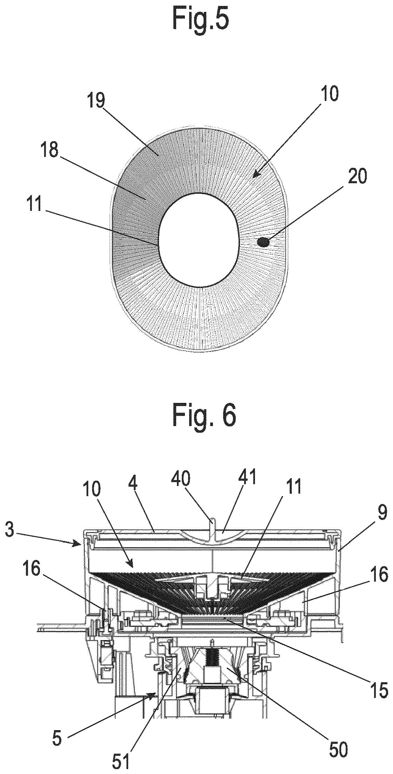

Wie in den Figuren 4 und 5 gezeigt ist, ändert sich die Anzahl der Rippen 13 mit zunehmendem Abstand von der Auslassöffnung 15. Ein innerer Ring 17 um die Auslassöffnung 15 weist eine geringere Anzahl von Rippen 13 auf als ein um den inneren Ring 17 angeordneter mittlerer Ring 18 aus Rippen. Zudem ist ein äußerer Ring 19 mit mehr Rippen versehen als der mittlere Ring 18. Dadurch können auch die weiter von der Auslassöffnung 15 entfernt liegenden Bereiche mit einer ausreichenden Anzahl von Rippen 13 ausgestattet werden, so dass der Abstand zwischen benachbarten Rippen kleiner als 6 mm, insbesondere kleiner als 4 mm ist, beispielsweise zwischen 1mm und 3mm, um ein Verklemmen von Kaffeebohnen 20 in einer Nut zwischen zwei benachbarten Rippen 13 zu vermeiden.

Der Behälter 3 besitzt an der Bodenfläche 10 keine kreisförmige Kontur, sondern ist länglich ausgebildet, d.h. die Längserstreckung ist mindestens 20 Prozent größer als die Erstreckung in der Breite. Die Verteilerplatte 11 ist ebenfalls länglich ausgebildet, während die Auslassöffnung 15 kreisförmig ist.

In Figur 6 ist der Bohnenbehälter 3 in der montierten Position oberhalb des Mahlwerks 5 gezeigt. Der Bohnenbehälter 3 weist an der Unterseite Verbindungssteg 16 auf, die zur Fixierung und Positionierung des Bohnenbehälters 3 auf dem Mahlwerk 5 dienen, so dass die Auslassöffnung 15 oberhalb eines drehbaren Zerkleinerungswerkzeuges 50, das innerhalb eines stationären Zerkleinerungswerkzeugs 51 angeordnet ist. Das drehbare Zerkleinerungswerkzeug 50 ist dabei um eine vertikale Achse drehbar, so dass das gemahlene Kaffeemehl nach unten weitergeleitet wird, insbesondere zu einer Brüheinheit abgegeben wird. An der Unterseite des Mahlwerkes kann dabei ein abgedichtetes Verschlusselement vorgesehen sein, um beim Aufbrühen von Kaffee ein Verkleben von Kaffeemehl zu vermeiden.

Der Behälter 3 ist über einen Deckel 4 verschlossen, der in einem mittleren Bereich eine Griffmulde 41 mit einem nach oben hervorstehenden Griffsteg 40. Dadurch kann die Bauhöhe der Kaffeemaschine 1 durch den Behälter 3 und den flachen Deckel 4 gering gehalten werden.

### Bezugszeichen

- 1: Kaffeemaschine
- 2: Tank
- 3: Behälter
- 4: Deckel
- 5: Mahlwerk
- 6: Brüheinheit
- 7: Kanne
- 8: Bedien-/Steuereinheit
- 9: Seitenwand
- 10: Bodenfläche
- 11: Verteilerplatte
- 12: Oberseite
- 13: Rippe
- 14: Arme
- 15: Auslassöffnung
- 16: Verbindungssteg
- 17: innerer Ring
- 18: mittlerer Ring
- 19: äußerer Ring
- 20: Kaffeebohnen
- 40: Griffsteg
- 41: Griffmulde
- 50: drehbares Zerkleinerungswerkzeug
- 51: stationäres Zerkleinerungswerkzeug

## Patentansprüche

1. Kaffeemaschine (1) mit mindestens einem Behälter (3) für Kaffeebohnen (20), der in einem Bodenbereich eine Auslassöffnung (15) aufweist, die zu einem Mahlwerk (5) führt, mittels dem die Kaffeebohnen (20) zu Kaffeemehl verarbeitbar sind, um dann in einer Brüheinheit (6) Kaffee zu brühen, wobei eine Bodenfläche (10) des Behälters (3) zu der Auslassöffnung (15) hin abfallend geneigt ist, wobei an der Bodenfläche (10) eine Vielzahl von zur Auslassöffnung (15) führenden Rippen (13) vorgesehen sind, die sternförmig um die Auslassöffnung (15) angeordnet sind, **dadurch gekennzeichnet, dass** oberhalb der Auslassöffnung (15) eine Verteilerplatte (11) vorgesehen ist und die Kaffeebohnen (20) zwischen einer Unterseite der Verteilerplatte (11) und den Rippen (13) zu der Auslassöffnung (15) gelangen und die Oberseite der Rippen (13) eine Neigung zur Horizontalen von kleiner 22° aufweisen.

2. Kaffeemaschine nach Anspruch 1, **dadurch gekennzeichnet, dass** zwischen zwei benachbarten Rippen (13) jeweils eine Nut ausgebildet ist und die Breite der Nut kleiner als 6 mm, insbesondere kleiner als 4 mm ist.

3. Kaffeemaschine nach Anspruch 1 oder 2, **dadurch gekennzeichnet, dass** die Oberseite der Rippen (13) eine Neigung zur Horizontalen von kleiner 20° aufweisen.

4. Kaffeemaschine nach einem der vorherigen Ansprüche, **dadurch gekennzeichnet, dass** die Brüheinheit (6) einen bewegbaren Filterhalter aufweist, in den ein Filterpapiereinsatz zur Aufnahme von Kaffeemehl einfügbar ist.

5. Kaffeemaschine nach einem der vorherigen Ansprüche, **dadurch gekennzeichnet, dass** die Anzahl der Rippen (13) mit zunehmendem Abstand von der Auslassöffnung (15) zunimmt.

6. Kaffeemaschine nach Anspruch 5, **dadurch gekennzeichnet, dass** in einem inneren ringförmigen Bereich (17) um die Auslassöffnung (15) weniger Rippen (13) als in einem zweiten ringförmigen Bereich (18, 19) um den ersten ringförmigen Bereich (17) angeordnet sind.

7. Kaffeemaschine nach einem der vorhergehenden Ansprüche, **dadurch gekennzeichnet, dass** der Bodenbehälter (3) an der Kaffeemaschine (1) lösbar fixiert ist, insbesondere über eine Steck- oder Rastverbindung.

8. Kaffeemaschine nach einem der vorherigen Ansprüche, **dadurch gekennzeichnet, dass** der Bohnenbehälter (3) aus Kunststoff hergestellt ist.

## Claims

1. Coffee machine (1) with at least one container (3) for coffee beans (20), which container has in a base region an outlet opening (15) leading to a grinding mechanism (5) by means of which the coffee beans (20) can be processed to form coffee grinds in order then to brew coffee in a brewing unit (6), wherein a base surface (10) of the container (3) is inclined so as to drop towards the outlet opening (15) and wherein a plurality of ribs (13), which lead to the outlet opening (15) and which are arranged in star shape around the outlet opening (15), is provided at the base surface (10), **characterised in that** a distributor plate (11) is provided above the outlet opening (15) and the coffee beans (20) pass between a lower side of the distributor plate (11) and the ribs (13) towards the outlet opening (15) and the upper side of the ribs (13) has an inclination with respect to the horizontal of less 22°.

2. Coffee machine according to claim 1, **characterised in that** a respective groove is formed between two adjacent ribs (13) and the width of the groove is smaller than 6 millimetres, in particular less than 4 millimetres.

3. Coffee machine according to claim 1 or 2, **characterised in that** the upper side of the ribs (13) has an inclination with respect to the horizontal of less than 20°.

4. Coffee machine according to any one of the preceding claims, **characterised in that** the brewing unit (6) comprises a movable filter holder into which a filter paper insert for reception of coffee grinds is insertable.

5. Coffee machine according to any one of the preceding claims, **characterised in that** the number of ribs (13) increases with increasing spacing from the outlet opening (15).

6. Coffee machine according to claim 5, **characterised in that** fewer ribs (13) are arranged in an inner annular region (17) around the outlet opening (15) than in a second annular region (18, 19) around the first annular region (17).

7. Coffee machine according to any one of the preceding claims, **characterised in that** the beans container (3) is detachably fixed to the coffee machine (1), in particular by way of a plug or detent connection.

8. Coffee machine according to any one of the preceding claims, **characterised in that** the beans container (3) is made from plastics material.

## Revendications

1. Machine à café (1) comprenant au moins un réservoir (3) de grains de café (20) qui comporte dans la zone de son fond une ouverture de sortie (15) qui conduit vers un broyeur (5) au moyen duquel les grains de café (20) peuvent être traités pour obtenir du café moulu de façon à pouvoir ensuite faire macérer du café dans une unité de macération (6), la surface du fond (10) du réservoir (3) étant inclinée vers le bas en direction de l'ouverture de sortie (15), sur la surface du fond (10) étant prévu un ensemble de nervures (13) conduisant à l'ouverture de sortie (15) qui sont réparties en étoile autour de l'ouverture de sortie (15),
**caractérisée en ce qu'**
au-dessus de l'ouverture de sortie (15) est montée une plaque de répartition (11) et les grains de café (20) parviennent à l'ouverture de sortie (15), entre la face inférieure de la plaque de répartition (11) et les nervures (13) et la face supérieure des nervures (13) a une inclinaison inférieure à 22° par rapport à l'horizontale.

2. Machine à café conforme à la revendication 11,
**caractérisée en ce qu'**
entre deux nervures (13) voisines est respectivement formée une rainure et la largeur de la rainure est inférieure à 6 mm et en particulier inférieure à 4 mm.

3. Machine à café conforme à la revendication 1 ou 2,
**caractérisée en ce que**
la face supérieure des nervures (13) a une inclinaison inférieure à 20° par rapport à l'horizontale.

4. Machine à café conforme à l'une des revendications précédentes,
**caractérisée en ce que**
l'unité de macération (6) comporte un porte-filtre mobile dans lequel peut être insérée une garniture en papier filtre destinée à recevoir le café moulu.

5. Machine à café conforme à l'une des revendications précédentes,
**caractérisée en ce que**
le nombre de rainures (13) augmente avec la distance à l'ouverture de sortie (15).

6. Machine à café conforme à la revendication 5,
**caractérisée en ce que**
dans une première zone annulaire interne (17) située autour de l'ouverture de sortie (15) il y a moins de nervures (13) que dans une seconde zone annulaire (18, 19) située autour de la première zone annulaire (17).

7. Machine à café conforme à l'une des revendications précédentes,
**caractérisée en ce que**
le réservoir inférieur (3) est fixé de manière amovible sur la machine à café (1), en particulier par une liaison par enfichage ou par une liaison par encliquetage.

8. Machine à café conforme à l'une des revendications précédentes,
**caractérisée en ce que**
le réservoir de grains (3) est réalisé en matériau synthétique.
